(19) Europäisches Patentamt
European Patent Office
Office européen des brevets

(11) EP 3 505 949 B1

(12) FASCICULE DE BREVET EUROPEEN

(45) Date de publication et mention de la délivrance du brevet:
**03.08.2022 Bulletin 2022/31**

(21) Numéro de dépôt: **18214066.5**

(22) Date de dépôt: **19.12.2018**

(51) Classification Internationale des Brevets (IPC):
**G01S 7/02** (2006.01)

(52) Classification Coopérative des Brevets (CPC):
**G01S 7/021**

(54) **PROCEDE DE DETECTION DE RADARS ET DISPOSITIF ASSOCIE**

VERFAHREN ZUR RADARERKENNUNG UND ENTSPRECHENDE VORRICHTUNG

RADAR DETECTION METHOD AND ASSOCIATED DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.12.2017 FR 1701380**

(43) Date de publication de la demande:
**03.07.2019 Bulletin 2019/27**

(73) Titulaire: **Avantix**
**13794 Aix-en-Provence Cedex 3 (FR)**

(72) Inventeur: **CHEFSON, Loïc**
**13100 Aix en Provence (FR)**

(74) Mandataire: **Cabinet Camus Lebkiri**
**25 rue de Maubeuge**
**75009 Paris (FR)**

(56) Documents cités:
**US-A1- 2003 085 831    US-A1- 2011 150 053**
**US-A1- 2016 209 492    US-B1- 7 397 415**
**US-B1- 7 830 297**

**EP 3 505 949 B1**

## Description

### DOMAINE TECHNIQUE DE L'INVENTION

Le domaine technique de l'invention est celui de la détection de radars.

La présente invention concerne en particulier un procédé de détection de radars mis en œuvre par un dispositif comportant un réseau antennaire. La présente invention concerne également un dispositif, un produit-programme d'ordinateur et un support d'enregistrement pour la mise en œuvre d'un tel procédé.

### ARRIERE-PLAN TECHNOLOGIQUE DE L'INVENTION

Il existe deux grands types de radar : les radars à émission continue dont les signaux sont continus et les radars impulsionnels dont les signaux sont constitués d'impulsions discrètes. Parmi les radars, les émetteurs peuvent être à antennes fixes ou à balayage, c'est-à-dire que l'émetteur émet toujours dans la même direction ou qu'il émet dans plusieurs directions avec une alternance périodique entre périodes d'activité et périodes de silence. Chaque radar est lui-même réglé selon des paramètres qui lui sont propres : fréquence du signal, puissance du signal, instants d'impulsion etc. Il existe donc une multitude de comportements différents selon le type de radars, selon le radar et son paramétrage mais également au sein d'un même radar qui peut présenter plusieurs modes, c'est-à-dire plusieurs jeux de paramètres différents.

Quand un capteur enregistre un signal d'acquisition de son environnement pour détecter la présence d'un ou de plusieurs radars, dans la majorité des cas, plusieurs radars dans l'environnement sont actifs aux mêmes instants. Les signaux en provenance des radars sont donc entrelacés au sein du signal d'acquisition et il est difficile de discriminer les différents radars. La tâche est d'autant plus difficile que certains radars peuvent avoir des paramétrages similaires.

Les algorithmes de désentrelacement ont pour objectif de séparer et de regrouper les impulsions en provenance de chacun des radars à partir du mélange fourni par le capteur. De manière générale, ces algorithmes n'obtiennent pas de résultats satisfaisants dans des situations réelles : ils ne parviennent ni à détecter l'ensemble des radars de l'environnement, ni à distinguer plusieurs modes d'un même radar qu'ils attribuent à des radars différents. Ces algorithmes ne parviennent donc pas à dresser un compte rendu fiable des radars en activité dans l'environnement du capteur.

Il existe donc un besoin de détecter et discriminer dans un signal reçu l'ensemble des radars ayant émis des ondes électromagnétiques sur la durée d'acquisition du capteur quel que soit le type de radars et quel que soit le ou les jeux de paramètres selon lesquels fonctionnent ces radars.

Le document US 2011/150053 intitulé « Method of detecting a radar signal, radar détection module, and wireless transceiver including the same » est connu de l'état de la technique

### RESUME DE L'INVENTION

L'invention offre une solution aux problèmes évoqués précédemment, en permettant de dresser un compte rendu des radars en activité dans l'environnement d'un capteur pendant sa durée d'acquisition, c'est-à-dire en identifiant le nombre exact de radars, quel que soit le type et le ou les jeux de paramètres de chaque radar.

Un premier aspect de l'invention concerne un procédé de détection d'au moins un radar dans un environnement selon la revendication 1.

Grâce à l'invention, plusieurs caractéristiques primaires et plusieurs caractéristiques secondaires d'une impulsion sont prises en compte pour le regroupement des impulsions. Les groupes primaires sont formés en considérant les caractéristiques primaires de toutes les impulsions prises individuellement, c'est-à-dire en considérant les caractéristiques primaires à l'échelle de l'impulsion puis sont regroupés en deux étapes de fusion, une première étape utilisant les caractéristiques primaires des groupes primaires c'est-à-dire en considérant les caractéristiques primaires à l'échelle du groupe primaire pour former des groupes secondaires et une seconde étape utilisant les caractéristiques secondaires des impulsions contenues dans les groupes secondaires pour former des groupes tertiaires. Les groupes tertiaires sont donc formés en prenant en compte différents types de caractéristiques à différentes échelles et le nombre de radars est donc déterminé de manière plus précise que si l'analyse n'utilisait que les caractéristiques primaires ou que les caractéristiques secondaires des impulsions.

Outre les caractéristiques qui viennent d'être évoquées dans le paragraphe précédent, le procédé de détection selon un premier aspect de l'invention peut présenter une ou plusieurs caractéristiques complémentaires parmi les suivantes, considérées individuellement ou selon toutes les combinaisons techniquement possibles.

Les caractéristiques primaires d'une impulsion sont choisies parmi au moins le groupe formé des caractéristiques suivantes : fréquence de l'impulsion, durée de l'impulsion, niveau de l'impulsion, direction d'arrivée de l'impulsion et modulation interne de l'impulsion.

Ainsi, les caractéristiques primaires sont des données faciles à déterminer à partir des impulsions.

Avantageusement, l'étape de production des groupes primaires comporte les sous-étapes suivantes :

- Sélectionner au moins une caractéristique primaire ;
- Initialiser le résultat de la production des groupes primaires par une partition comportant les impulsions du bloc d'impulsions ;
- Pour chaque caractéristique primaire sélectionnée, produire au moins une partition par mise en œuvre d'un algorithme de partitionnement, l'algorithme de partitionnement partitionnant séquentiellement les partitions obtenues suite à la mise en œuvre de cette sous-étape pour la caractéristique primaire précédente ou l'initialisation du résultat.
- Les groupes primaires sont les partitions obtenues après avoir traité toutes les caractéristiques primaires sélectionnées.

Ainsi, la formation des groupes primaires est pyramidale : chaque étape de partitionnement utilise les groupes générés à l'étape précédente pour former de nouveaux groupes. Ainsi, les groupes primaires prennent en compte l'ensemble des caractéristiques primaires indépendamment les unes des autres.

Avantageusement, l'algorithme de partitionnement utilise une métrique basée sur la caractéristique primaire utilisée et produit une liste d'impulsions ordonnée, chaque impulsion étant associée à une valeur de distance selon ladite métrique, la séquence ordonnée de valeurs de distance obtenue étant alors considérée comme une fonction, la séparation entre deux partitions se faisant au niveau d'une impulsion pour laquelle la valeur de la dérivée de ladite fonction remplit une condition prédéterminée relativement à un seuil de dérivée prédéterminé.

Ainsi, il est facile de réaliser le partitionnement en se basant sur les résultats d'un algorithme de partitionnement déjà existant comme l'algorithme OPTICS ou l'algorithme DBSCAN.

Les caractéristiques primaires de groupes primaires d'un groupe primaire sont calculées par moyennage des valeurs des caractéristiques primaires des impulsions regroupées dans le groupe primaire.

Ainsi, les caractéristiques primaires de groupes primaires sont représentatives de l'ensemble des valeurs des caractéristiques primaires des impulsions composant le groupe primaire.

Avantageusement, l'étape de production des groupes secondaires comporte plusieurs sous-étapes :

- Ordonner les groupes primaires au sein d'une première liste ordonnée, chaque groupe primaire ayant un rang dans la première liste ordonnée, les rangs étant choisis arbitrairement croissants et supérieurs ou égaux à 1 ;
- Affecter un rang courant à 0 ;
- Tant qu'il reste des groupes primaires ayant un rang supérieur au rang courant dans la première liste ordonnée :

  • Sélectionner le groupe primaire dont le rang est le plus proche du rang courant sans être égal au rang courant pour qu'il devienne le groupe primaire courant et affecter au rang courant le rang du groupe primaire courant ;
  • Calculer une première mesure de similitude fonction des caractéristiques primaires de groupes primaires entre le groupe primaire courant et chacun des groupes primaires ayant un rang supérieur au rang courant restant dans la première liste ordonnée ;
  • Pour chaque groupe primaire ayant un rang supérieur au rang courant dont la première mesure de similitude est supérieure à un premier seuil de similitude prédéterminé, fusionner le groupe primaire avec le groupe primaire courant et supprimer le groupe primaire de la liste ordonnée.

- Les groupes secondaires sont les groupes primaires restants dans la première liste ordonnée.

Ainsi, une première étape de fusion est réalisée par une première mesure de similitude basée sur les caractéristiques primaires des groupes primaires.

Les caractéristiques secondaires d'une impulsion comportent l'instant de l'impulsion.

Ainsi, il est possible de réaliser un histogramme des différences d'instants d'impulsion qui contient des informations utiles pour déterminer des valeurs temporelles caractérisant un radar.

Avantageusement, l'étape de production des groupes tertiaires comporte plusieurs sous-étapes :

- Pour chaque groupe secondaire :

  • Réaliser un histogramme des différences d'instants d'impulsion des impulsions du groupe secondaire, histogramme des différences d'instants d'impulsion représentant l'occurrence des différences d'instants d'impulsion sur une pluralité d'intervalles de temps appelés bins.
  • Etudier la seconde moitié de l'histogramme des différences d'instants d'impulsion : si toutes les occurrences sont nulles sauf l'occurrence du dernier bin, estimer une valeur temporelle caractérisant le groupe secondaire.

- Ordonner les groupes secondaires au sein d'une seconde liste ordonnée, chaque groupe secondaire ayant un rang dans la seconde liste ordonnée, les rangs étant choisis arbitrairement croissants et supérieurs ou égaux à 1 ;
- Affecter un rang courant à 0 ;
- Tant qu'il reste des groupes secondaires ayant un rang supérieur au rang courant dans la seconde liste ordonnée :

  • Sélectionner le groupe secondaire dont le rang est le plus proche du rang courant sans être égal au rang courant pour qu'il devienne le groupe secondaire courant et affecter au rang courant le rang du groupe secondaire courant ;
  • Calculer une seconde mesure de similitude fonction de la valeur temporelle entre le groupe secondaire courant et chacun des groupes secondaires ayant un rang supérieur au rang courant restant dans la seconde liste ordonnée ;
  • Pour chaque groupe secondaire ayant un rang supérieur au rang courant dont la seconde mesure de similitude est supérieure à un second seuil de similitude prédéterminé, fusionner le groupe secondaire avec le groupe secondaire courant et supprimer le groupe secondaire de la seconde liste ordonnée.

- Les groupes tertiaires sont les groupes secondaires restants dans la seconde liste ordonnée.

Ainsi, une deuxième étape de fusion est réalisée par une seconde mesure de similitude basée sur les caractéristiques secondaires des impulsions.

Avantageusement, le procédé selon un premier aspect de l'invention comporte une étape de gestion des résidus, les résidus se définissant comme les impulsions d'un bloc d'impulsion n'appartenant à aucun groupe tertiaire.

Ainsi, on étudie les impulsions ayant des valeurs singulières qui pourraient appartenir à un signal de radar et qui ont été rejetées par le procédé dans un premier temps.

Avantageusement, l'étape de traitement des résidus comporte les sous-étapes suivantes :

- Pour chaque groupe tertiaire, calculer un histogramme primaire de chaque caractéristique primaire et un histogramme secondaire de chaque caractéristique secondaire.
- Pour chaque résidu :

  • Calculer une note de correspondance entre le résidu et chaque groupe tertiaire en fonction de ses histogrammes primaires et de ses histogrammes secondaires ;
  • Sélectionner la note de correspondance maximale obtenue ;
  • Associer le résidu au groupe tertiaire correspondant à la note de correspondance maximale si la note de correspondance maximale est au-dessus d'un premier seuil de correspondance prédéterminé ;
  • Eliminer le résidu si la note de correspondance maximale est en dessous du premier seuil de correspondance et au-dessus d'un second seuil de correspondance prédéterminé ;

- Regrouper les résidus non associés et non éliminés dans un bloc d'impulsion de résidus et réaliser les mêmes étapes de regroupement pour former des groupes tertiaires de résidus.

Ainsi, trois options sont possibles pour chaque résidu : si finalement, ses caractéristiques primaires et secondaires sont proches de celles d'un groupe tertiaire, il est ajouté audit groupe tertiaire, si ses caractéristiques primaires et secondaires sont très éloignées de celles de tous les groupes tertiaires, il est à nouveau traité, sinon il est éliminé. On réalise alors les mêmes étapes que précédemment avec un paramétrage moins exigeant pour former des groupes tertiaires de résidus.

Avantageusement, les groupes tertiaires de résidus sont regroupés avec les groupes tertiaires en réalisant les mêmes sous-étapes que la production des groupes tertiaires pour obtenir des nouveaux groupes tertiaires Ainsi, les groupes tertiaires et les groupes tertiaires de résidus sont regroupés s'ils présentent des similitudes temporelles, c'est-à-dire selon leurs caractéristiques secondaires.

Un deuxième aspect de l'invention concerne un dispositif selon la revendication 9.

Un troisième aspect de l'invention concerne un produit programme d'ordinateur selon la revendication 10.

Un quatrième aspect de l'invention concerne un support d'enregistrement selon la revendication 11 L'invention et ses différentes applications seront mieux comprises à la lecture de la description qui suit et à l'examen des figures qui l'accompagnent.

## BREVE DESCRIPTION DES FIGURES

Les figures sont présentées à titre indicatif et nullement limitatif de l'invention.

- La figure 1 montre une représentation schématique du procédé selon un premier aspect de l'invention selon un premier mode de réalisation.
- La figure 2 montre une représentation schématique du dispositif selon un deuxième aspect de l'invention.
- La figure 3 montre une représentation schématique de l'étape de production de groupes primaires.
- La figure 4 montre une représentation schématique du fonctionnement du partitionnement.
- La figure 5 montre une représentation schématique de la première itération de l'étape de production des groupes secondaires quand il y a fusion de groupes primaires.
- La figure 6A montre un histogramme des différences d'instants d'impulsion et la figure 6B montre le fonctionnement d'un radar correspondant à cet histogramme.
- La figure 7 montre une représentation schématique de la première itération de l'étape de production des groupes tertiaires quand il y a fusion de groupes secondaires.
- La figure 8 montre une représentation schématique de l'étape de traitement des résidus pour un résidu dans le cas où le résidu n'est ni associé, ni éliminé.

## DESCRIPTION DETAILLEE D'AU MOINS UN MODE DE REALISATION DE L'INVENTION

Sauf précision contraire, un même élément apparaissant sur des figures différentes présente une référence unique.

Un premier aspect de l'invention concerne un procédé de détection 100 de la présence d'au moins un radar 300 dans un environnement proche d'un dispositif 200 selon un deuxième aspect de l'invention, permettant la mise en œuvre du procédé de détection 100. Par environnement proche, on entend une zone circulaire entourant le dispositif 200 de diamètre 50 kilomètres.

Dans tout ce qui suit, nous désignerons par radar, un équipement électronique de télécommunications qui comporte au moins un émetteur qui émet des signaux sous forme d'ondes électromagnétiques pour détecter la présence et déterminer la position, et éventuellement la vitesse, d'objets tels que des avions ou des bateaux.

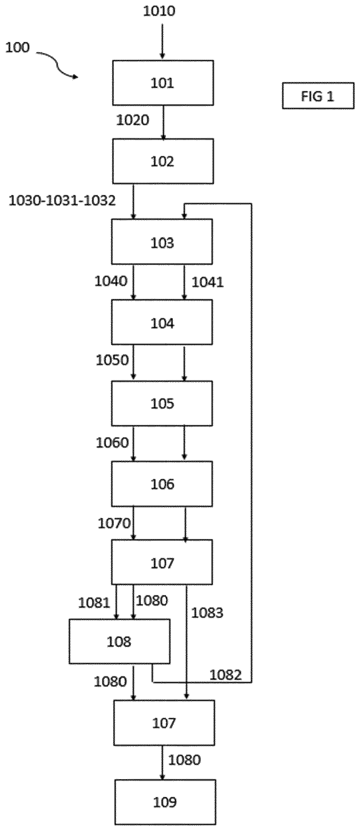

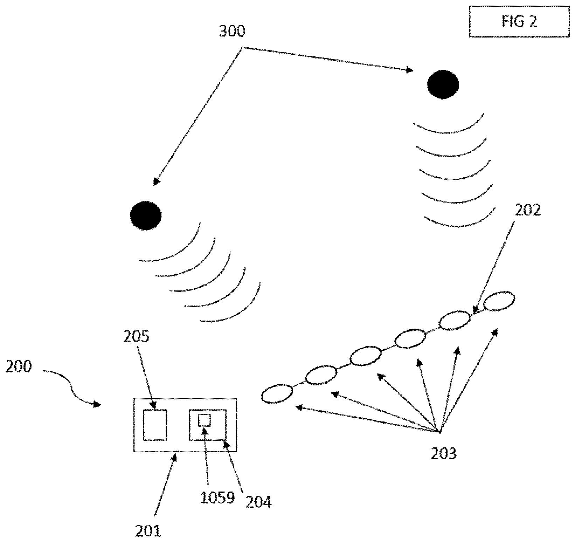

Le procédé 100 selon un premier aspect de l'invention comporte plusieurs étapes dont l'enchaînement est représenté à la figure 1. Ces étapes sont mises en œuvre par le dispositif 200 selon un deuxième aspect de l'invention, représenté à la figure 2. Le dispositif 200 comporte une unité de calcul 201 réalisant des étapes 102 à 109 de calculs du procédé 100 et un réseau antennaire 202 réalisant une étape 101 d'acquisition et de numérisation.

Le réseau antennaire 202 comporte au moins une antenne 203. Sur la figure 2, le réseau antennaire 202 présente six antennes 203 qui captent en même temps des signaux d'acquisition 1010 en provenance de l'environnement proche, c'est-à-dire que chaque antenne 203 reçoit un signal d'acquisition 1010 différent mais que l'acquisition est déclenchée simultanément pour toutes les antennes 203. On entend par antenne 203 un dispositif comportant un élément antennaire capable de capter des signaux de son environnement et d'un convertisseur analogique numérique capable de numériser un signal. Si le réseau antennaire 202 comporte une pluralité d'antennes 203, le signal d'acquisition 1010 reçu par chaque antenne 203 est ensuite numérisé de manière que tous les signaux d'acquisition 1010 reçus par les antennes 203 soient numérisés simultanément. Après numérisation, chaque antenne 203 transmet le signal numérisé 1020 obtenu après numérisation du signal d'acquisition 1010 à l'unité de calcul 201. Dans la présente demande, unité de calcul renvoie à un dispositif possédant des moyens de stockage 204 et des moyens de calculs et de détection 205 sur les signaux numérisés 1020. Des moyens de stockage peuvent par exemple être un disque dur, une mémoire SSD ou une mémoire Flash simple ou à grille, locale ou distante. Des moyens de calcul et de détection peuvent être un microprocesseur ou un circuit logique programmable comme un FPGA (pour « Field-Programmable Gate Array »).

Après réception des signaux numérisés 1020, l'unité de calcul 201 met en œuvre les étapes 102 à 109 de calculs du procédé 100.

L'étape de découpage d'un signal numérisé 1020 en impulsions 1030 est différente selon que le signal provienne d'un radar impulsionnel ou que le signal provienne d'un radar à émission continue. En effet, un radar impulsionnel émet un signal qui contient déjà des impulsions 1030, il est donc facile de le découper en impulsions 1030 alors que le radar à émission continue émet un signal continu qu'il faut donc découper artificiellement en impulsions 1030. Pour découper artificiellement un signal continu en impulsions 1030, une impulsion 1030 peut par exemple être considérée comme la valeur de ce signal continu sur un certain intervalle de temps. La valeur de cet intervalle de temps est par exemple 1 milliseconde. Préférentiellement, quand le signal numérisé 1020 a été découpé artificiellement, une information de troncature artificielle est ajoutée à l'impulsion. On entend par impulsion une variation brusque du signal avec retour à l'état initial.

Une fois les signaux numérisés 1020 découpés en impulsions 1030, chaque impulsion 1030 est caractérisée pour obtenir des caractéristiques primaires 1031 et des caractéristiques secondaires 1032. Les caractéristiques primaires 1031 d'une impulsion 1030 peuvent être par exemple la fréquence de l'impulsion, la durée de l'impulsion, le niveau de l'impulsion, la direction d'arrivée de l'impulsion ou encore la modulation interne de l'impulsion. Les caractéristiques secondaires 1032 d'une impulsion 1030 sont des caractéristiques temporelles comme l'instant de l'impulsion, le début de l'impulsion ou encore la fin de l'impulsion. Les caractéristiques primaires 1031 et secondaires 1032 sont obtenues par des procédés connus. Par exemple, la fréquence de l'impulsion peut être obtenu par le calcul du spectre du signal et la direction d'arrivée par un algorithme de goniométrie si le réseau antennaire 202 est composé de plusieurs antennes 203.

Après l'étape 102 de découpage des signaux numérisés 1020 en impulsions 1030 et de caractérisation de ces impulsions 1030, les impulsions 1030 sont regroupées en blocs d'impulsions 1040. On entend par bloc d'impulsions 1040 un ensemble d'impulsions 1030 délimitées soit en nombre, par exemple un bloc d'impulsions 1040 contient 10 000 impulsions 1030, soit en temps, par exemple un bloc d'impulsions 1040 correspond à une seconde d'écoute. Les blocs d'impulsions 1040 peuvent être de tailles diverses et hétérogènes. De manière générale, plus les blocs d'impulsions 1040 contiennent d'impulsions 1030, plus il est facile de discriminer les radars 300 à partir du signal d'acquisition 1010.

Après l'étape 103 de regroupement des impulsions 1030 en blocs d'impulsions 1040, les étapes 104 à 109 de calculs se font pour chaque bloc d'impulsions 1040.

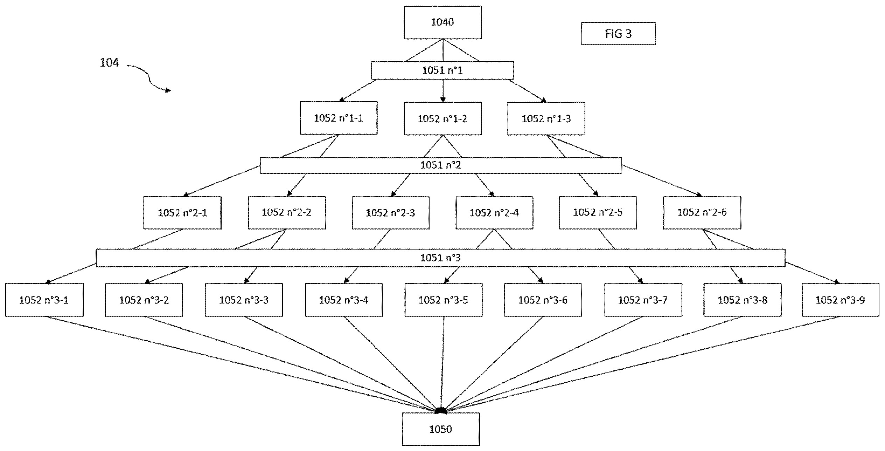

Pour chaque bloc d'impulsions 1040, une étape 104 de production de groupes primaires 1050 est réalisée : le principe est représenté à la figure 3. Les groupes primaires 1050 sont des sous-groupes d'impulsions 1030 d'un bloc d'impulsions 1040, c'est-à-dire que les groupes primaires 1050 ont chacun un cardinal strictement inférieur au cardinal du bloc d'impulsions 1040. On entend par cardinal d'un groupe le nombre d'éléments de ce groupe.

La production des groupes primaires 1050 exploite les caractéristiques primaires 1031 des impulsions 1030 contenues dans le bloc d'impulsions 1040 pour diviser le bloc d'impulsions 1040 en différents groupes primaires 1050 regroupant des impulsions 1030 ayant des caractéristiques primaires 1031 proches.

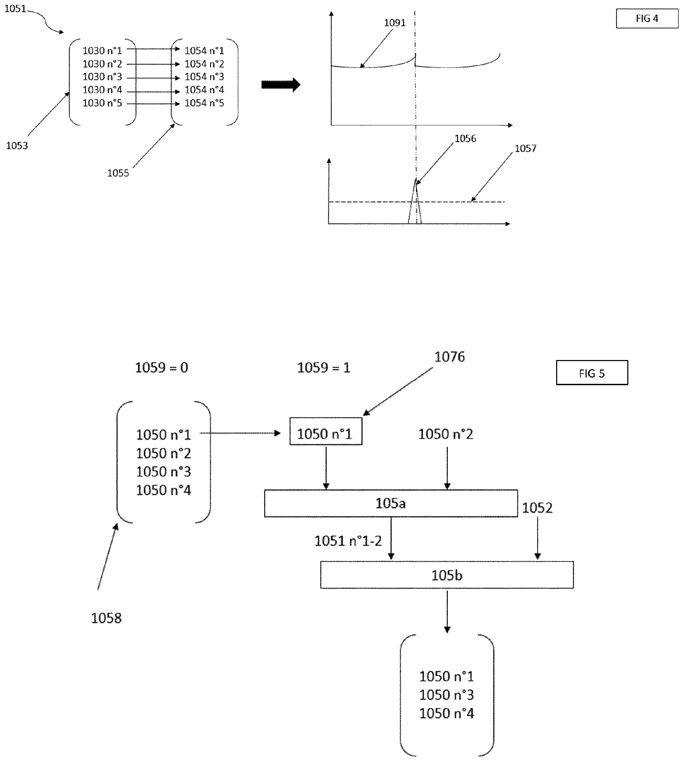

L'étape 104 de production des groupes primaires 1050 réalise des partitionnements 1051 successifs, chaque partitionnement 1051 étant basé sur un unique paramètre primaire 1031. Un premier partitionnement 1051 est basé sur un premier paramètre primaire 1051 choisi parmi les paramètres primaires connus pour chaque impulsion 1030 du bloc d'impulsions 1040. Le premier partitionnement 1051 réalise un partitionnement 1051 du bloc d'impulsions 1040 et forme des premiers sous-groupes ou premières partitions 1052 du bloc d'impulsions 1040, chaque première partition 1052 regroupant les impulsions 1030 du bloc d'impulsions 1040 ayant des premières caractéristiques primaires 1031 proches. On réalise ensuite des partitionnements 1051 successifs, chaque partitionnement 1051 étant basé sur une caractéristique primaire 1031 n'ayant pas déjà été utilisée précédemment pour réaliser un partitionnement 1051 et partitionnant les partitions 1052 formées à l'étape de partitionnement 1051 précédente. Le nombre de partitionnements 1051 réalisés est égal au nombre de caractéristiques primaires 1031. Le premier partitionnement 1051 permet d'initialiser la succession des partitionnements 1051 pour former des premières partitions 1052 à partir du bloc d'impulsions 1040. Le fonctionnement des partitionnements 1051 est pyramidale comme illustré à la figure 3. En effet, le premier partitionnement 1051 n°1 forme trois premières partitions 1052 n°1-1, 1052 n°1-2, 1052 n°1-3. Ces trois premières partitions 1052 n°1-1, 1052 n°1-2, 1052 n°1-3 vont chacune former une ou plusieurs deuxièmes partitions 1052 après un deuxième partitionnement 1051 n°2. La première partition 1052 n°1-1 forme par exemple deux deuxièmes partitions 1052 n°2-1, 1052 n°2-2 qui vont-elles-mêmes former trois troisièmes partitions 1052 n°3-1, 1052 n°3-2, 1052 n°3-3 après un troisième partitionnement 1051 n°3 et ainsi de suite jusqu'à ce qu'on ait réalisé un partitionnement 1051 pour chaque caractéristique primaire 1031. Le dernier partitionnement 1051 basé sur la dernière caractéristique primaire 1031 forment les groupes primaires 1050. Dans la figure 3, le troisième partitionnement 1052 n°3 est le dernier partitionnement, c'est-à-dire qu'il y a trois caractéristiques primaires 1031. Les groupes primaires 1050 formés présentent des formes variées. Les caractéristiques primaires 1031 étant indépendantes les unes des autres, l'ordre des paramètres primaires 1051 utilisé influe peu sur le résultat final du procédé 100. Un partitionnement 1051 est réalisé par un algorithme de partitionnement 1051 qui classe les impulsions 1030 d'un groupe selon une métrique dépendant de la caractéristique primaire 1031 sur laquelle est basé le partitionnement 1051. Le groupe peut être le bloc d'impulsions 1040 si on effectue le premier partitionnement ou une partition obtenue lors d'un partitionnement précédent. Le principe du partitionnement 1051 est décrit à la figure 4. Pour chaque impulsion 1030 du groupe, l'algorithme de partitionnement 1051 calcule une valeur de distance 1054 selon ladite métrique. Après avoir ordonné les impulsions 1030 au sein d'une liste ordonnée d'impulsions 1053, c'est-à-dire en leur affectant un rang se définissant par exemple, comme un nombre entier compris entre 1 et le cardinal du groupe, l'algorithme de partitionnement 1051 fournit une séquence ordonnée de valeurs de distance 1055 de même cardinal que la liste ordonnée d'impulsions 1053, donnant au rang i de la séquence ordonnée de valeurs de distance 1055, la valeur de distance 1054 correspondant à l'impulsion 1030 affectée au rang i dans la liste ordonnée d'impulsions 1053. Par exemple, l'impulsion 1030 affectée au rang 4 dans la liste ordonnée d'impulsions 1053 est associée à une valeur de distance 1054 qui est placée au rang 4 de la séquence ordonnée de valeurs de distance 1055. L'algorithme de partitionnement 1051 est par exemple l'algorithme K-means, l'algorithme DBSCAN ou l'algorithme OPTICS. Par exemple, l'algorithme OPTICS ordonne les impulsions 1030 par voisinage et définit une métrique croissante appelée reachability-distance en fonction de paramètres à régler.

Les valeurs de distance 1054 de la séquence ordonnée de valeurs de distance 1055 sont ensuite tracées en fonction du rang des valeurs de distance 1054 dans la séquence ordonnée de valeurs de distance 1055, définissant ainsi une fonction 1091. De manière générale, la fonction 1091 présente certaines ruptures synonymes d'un écart majeur entre les caractéristiques primaires 1031 des impulsions 1030 avant la rupture et les caractéristiques primaires 1031 des impulsions 1030 après la rupture et donc synonymes d'un passage d'une partition 1052 à une autre partition 1052. Pour automatiser le partitionnement 1051 à partir de la fonction 1091, la dérivée 1056 de la fonction est tracée. La dérivée 1056 présente des pics au niveau des ruptures de la fonction 1091 : en choisissant un seuil de dérivée 1057 adapté, on partitionne les impulsions 1030 quand la valeur de la dérivée 1056 répond à une certaine condition prédéterminée par rapport au seuil de dérivée 1057. Cette condition est par exemple que la valeur de la dérivée 1056 passe au-dessus du seuil de dérivée 1057 ou encore que la valeur de la dérivée 1056 passe en-dessous du seuil de dérivée 1057. La valeur de la dérivée 1056 pour laquelle la condition est remplie correspond à un rang qui correspond lui-même à une impulsion 1030 qui délimite la séparation entre deux partitions 1052.

L'étape 104 de formation des groupes primaires 1050 est l'étape la plus longue en temps de calcul du procédé 100. Quand une caractéristique primaire 1031 est discrète et utilise un faible panel de valeurs, par exemple 10 valeurs, il est possible d'utiliser un algorithme de partitionnement 1051 moins complexe pour diminuer le temps de calcul. On peut par exemple effectuer un simple tri.

Pour chaque partition 1052 réalisée, il est possible de définir de nouvelles métriques pour caractériser les partitions 1052. On peut par exemple définir un centre de partition 1051 ou encore un rayon moyen de partition 1052 à partir de la métrique de l'algorithme de partitionnement 1051. Ces nouvelles métriques peuvent par exemple servir à fusionner des partitions 1052 à la fin de chaque étape de partitionnement si les partitions 1052 remplissent des conditions qui dépendent des nouvelles métriques. Par exemple, deux partitions 1052 ayant des centres de partition proches sont fusionnés.

A la fin de l'étape 104 de production des groupes primaires 1050, toutes les impulsions 1030 du bloc d'impulsions 1040 ne sont pas comprises dans les groupes primaires 1050. En effet, certaines impulsions 1030 ont des caractéristiques primaires 1031 trop éloignées des caractéristiques primaires 1031 des autres impulsions 1030 et sont donc écartées. Les impulsions 1030 écartées sont appelées par la suite résidus 1081.

Une fois les groupes primaires 1050 produits, des caractéristiques primaires de groupes primaires 1060 sont calculées. Les caractéristiques primaires de groupes primaires 1060 d'un groupe primaire 1050 sont calculées à partir des caractéristiques primaires 1031 des impulsions 1030 regroupées dans le groupe primaire 1050. Ainsi, les caractéristiques primaires de groupes primaires 1060 sont par exemple la fréquence moyenne définie comme la moyenne des fréquences d'impulsion des impulsions 1030 regroupées dans le groupe primaire 1050 ou encore la modulation intrapulse médiane définie comme la médiane des modulations intrapulse des impulsions 1030 regroupées dans le groupe primaire 1050. Préférentiellement, le nombre de caractéristiques primaires de groupes primaires 1060 est égal au nombre de caractéristiques primaires 1031.

Après l'étape 105 de calcul des caractéristiques primaires de groupes primaires 1060, les groupes primaires 1050 sont regroupées pour former des groupes secondaires 1070. Les groupes secondaires 1070 sont des groupes formés d'un groupe primaire 1050 ou de l'union d'une pluralité de groupes primaires 1050. L'étape 106 de production des groupes secondaires 1070 est illustrée à la figure 5 et est basée sur une boucle d'itérations. Dans un premier temps, les groupes primaires 1050 sont ordonnés au sein d'une première liste ordonnée 1058 dont le cardinal est égal au nombre de groupes primaires 1050, c'est-à-dire qu'on leur affecte un rang se définissant par exemple, comme un nombre entier compris entre 1 et le nombre de groupes primaires 1050. La première liste ordonnée 1058 est par exemple ordonnée par rang croissant. Sur la figure 5, la première liste ordonnée 1058 contient quatre groupes primaires 1050 n°1, 1050 n°2, 1050 n°3, 1050 n°4 ayant respectivement pour rang 1,2,3,4.

Ensuite, on initialise une variable de contrôle d'itérations appelée rang courant 1059 à la valeur 0. Le rang courant 1059 est stocké dans une zone des moyens de stockage 204 dédiée au contrôle d'itérations. Le groupe primaire 1050 dont le rang est le plus proche du rang courant 1059 mais n'est pas égal au rang courant 1059 devient le groupe primaire courant 1076 et le rang du groupe primaire courant 1076 est affecté au rang courant 1059.

Une première mesure de similitude 1051 est ensuite calculée entre le groupe primaire courant 1076 et tous les autres groupes primaires 1050 de la première liste ordonnée 1058, c'est-à-dire les groupes primaires 1050 ayant un rang strictement supérieur au rang courant 1059. La première mesure de similitude 1051 dépend des caractéristiques primaires de groupes primaires 1060. La première mesure de similitude 1051 est par exemple une somme de termes dont chaque terme dépend d'une unique caractéristique primaire de groupes primaires 1060, chaque terme valant 1 si la différence entre les caractéristiques primaires de groupes primaires des deux groupes primaires 1050 comparés est supérieure à un certain seuil de tolérance et valant 0 sinon. Par exemple, on peut choisir un seuil de tolérance de 3MHz pour la fréquence moyenne si elle est utilisée comme caractéristique primaire de groupes primaires 1060. Les groupes primaires 1050 ayant un rang supérieur au rang courant 1059 et possédant une première mesure de similitude 1051 supérieure à un premier seuil de similitude 1052 avec le groupe primaire courant 1076 sont fusionnés avec le groupe primaire courant 1076, c'est-à-dire que toutes les impulsions 1030 regroupées au sein des groupes primaires 1050 fusionnés sont regroupées avec les impulsions 1030 du groupe primaire courant 1076. Ces groupes primaires sont alors supprimés de la première liste ordonnée 1058.

Dans la figure 5, le groupe primaire de rang 1 1050 n°1 est choisi comme groupe primaire courant 1076 puisque le rang courant 1059 vaut initialement 0. Le rang courant 1059 prend alors la valeur 1. Sur la figure 5, le groupe primaire courant 1076 est comparé au groupe primaire de rang 2 1050 n°2 de la première liste ordonnée 1058. L'étape 105a de calcul de la première mesure de similitude 1051 donne la première mesure de similitude 1051 n°1-2 entre le groupe primaire courant 1050 n°1 et le groupe primaire de rang 2 1050 n°2. L'étape 105b de comparaison entre la première mesure de similitude 1051 n°1-2 et le premier seuil de similitude 1052 donne la première liste ordonnée 1058 obtenue après fusion ou non entre le groupe primaire courant 1050 n°1 et le groupe primaire de rang 2 1050 n°2. Dans la figure 5, le groupe primaire courant 1050 n°1 et le groupe primaire de rang 2 1050 n°2 sont fusionnés au sein du groupe primaire de rang 1 1050 n°1 et le groupe primaire de rang 2 1050 n°2 est supprimé de la première liste ordonnée 1058. La prochaine étape non représentée sur la figure 5 est de réaliser les étapes 105a-105b de calcul de la première mesure de similitude 1051 et de comparaison entre le groupe primaire courant 1050 n°1 et les groupes primaires restants 1050 n°3, 1050 n°4 dans la première liste ordonnée 1058. Si à l'issue de ces étapes 105a-105b, le groupe primaire courant 1050 n°1 n'a pas été fusionné avec les groupes primaires restants 1050 n°3, 1050 n°4 dans la première liste ordonnée 1058, le groupe primaire courant 1050 n°1 devient un groupe secondaire 1070 et le groupe primaire de rang 3 1050 n°3 devient le groupe primaire courant 1076. Le rang courant 1059 est alors affecté à la valeur 3. On continue ainsi tant qu'il reste dans la première liste ordonnée 1058 des groupes primaires 1050 ayant un rang supérieur au rang courant 1059.

Quand la boucle d'itérations s'arrête, les groupes primaires 1050 de la première liste ordonnée 1058 sont les groupes secondaires 1070.

Il existe bien sûr une pluralité de boucles d'itérations pouvant décrire le même principe général que celui décrit dans la boucle proposée, à savoir fusionner les groupes primaires 1050 similaires, la similitude se définissant par comparaison entre une première mesure de similitude 1051 et un premier seuil de similitude 1052 et la première mesure de similitude 1051 étant définie à partir des caractéristiques primaires de groupes primaires 1060. Il aurait par exemple été possible d'initialiser le rang courant 1059 au cardinal de la première liste ordonnée 1058 et de réaliser les étapes tant qu'il reste des groupes primaires 1050 ayant un rang inférieur au rang courant 1059 dans la première liste ordonnée 1058.

Après l'étape 106 de production des groupes secondaires 1070, les groupes secondaires 1070 sont regroupés pour former des groupes tertiaires 1080. Les groupes tertiaires 1080 sont des groupes formés d'un groupe secondaire 1070 ou de l'union d'une pluralité de groupes secondaires 1070. L'étape 107 de production des groupes tertiaires 1080 utilise les caractéristiques secondaires 1032 des impulsions 1030 regroupées dans les groupes tertiaires 1080 et en particulier les instants d'impulsion.

Pour chaque groupe secondaire 1070, un histogramme des différences d'instants d'impulsion 1071 est produit. Une différence d'instants d'impulsion est la valeur absolue de l'écart entre deux instants d'impulsion. Pour calculer les différences d'instants d'impulsions et réaliser l'histogramme des différences d'instants d'impulsion, les instants d'impulsion sont triés par ordre croissant. Une différence d'instants d'impulsions est ensuite calculée entre chaque instant d'impulsion et l'instant d'impulsion qui lui est immédiatement supérieur. Par exemple, si on a quatre instants d'impulsion triés par ordre croissant, on réalise une différence d'instants d'impulsion entre le premier instant d'impulsion et le deuxième instant d'impulsion, entre le troisième instant d'impulsion et le deuxième instant d'impulsion puis entre le quatrième instant d'impulsion et le troisième instant d'impulsion. L'histogramme des différences d'instants d'impulsion 1071 représente l'occurrence des différences d'instants d'impulsion sur une pluralité d'intervalles de temps appelés bins 1072. Par exemple, si l'histogramme des différences d'instants d'impulsion 1071 comporte N bins 1072, la valeur de l'intervalle de temps correspondant au bin n°i 1072 s'écrit ainsi :

$$\left[\Delta t_{min} + \frac{\Delta t_{max} - \Delta t_{min}}{N} \, x \, (i-1); \; \Delta t_{min} + \frac{\Delta t_{max} - \Delta t_{min}}{N} \, x \, i\right[$$

Avec $\Delta t_{min}$ la plus petite valeur de différence d'instants d'impulsion parmi les valeurs de différence d'instants d'impulsion de toutes les impulsions 1030 regroupées dans le groupe secondaire 1070 et $\Delta t_{max}$ la plus grande valeur de différence d'instants d'impulsion parmi les valeurs de différence d'instants d'impulsion de toutes les impulsions 1030 regroupées dans le groupe secondaire 1070.

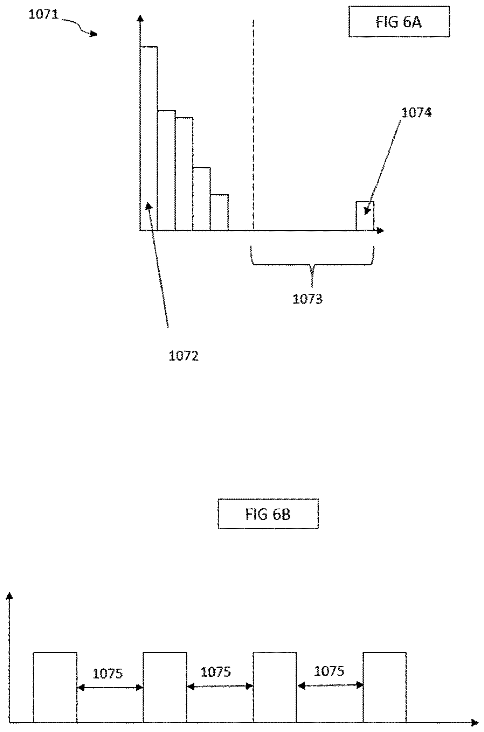

L'analyse de l'histogramme des différences d'instants d'impulsion 1071 consiste à déterminer s'il y a un motif périodique dans l'activité du groupe secondaire 1070. On considère que le groupe secondaire 1070 présente une périodicité lorsque le groupe secondaire 1070 comporte des périodes d'activité délimitées entrecoupées de périodes de silence et que les périodes de silence sont au moins aussi longues que les périodes d'activité comme représenté dans la figure 6B. Ce type de comportement est caractéristique d'un radar à balayage avec une période de balayage. Un groupe secondaire 1070 présentant une périodicité présente un histogramme des différences d'instants d'impulsion 1071 dont la première moitié des bins 1072 présentent des occurrences non nulles et dont la seconde moitié 1073 des bins 1072 présentent des occurrences quasi-nulles sauf pour le tout dernier bin 1074. On entend par occurrence quasi-nulle une occurrence négligeable devant l'occurrence du dernier bin 1074, par exemple une occurrence inférieure ou égale à 1. La figure 6A montre un histogramme des différences d'instants d'impulsion 1071 présentant une périodicité.

A partir du dernier bin 1074 d'un histogramme des différences d'instants d'impulsion 1071 présentant une périodicité, il est possible d'estimer une valeur temporelle 1075 comme la période de balayage. La valeur temporelle 1075 estimée est l'intervalle de temps correspondant au dernier bin 1074. A partir de la valeur temporelle 1075 estimée, il est possible par de déterminer d'autres valeurs temporelles comme par exemple les intervalles de temps des périodes d'activité du radar ou le nombre de périodes d'activité.

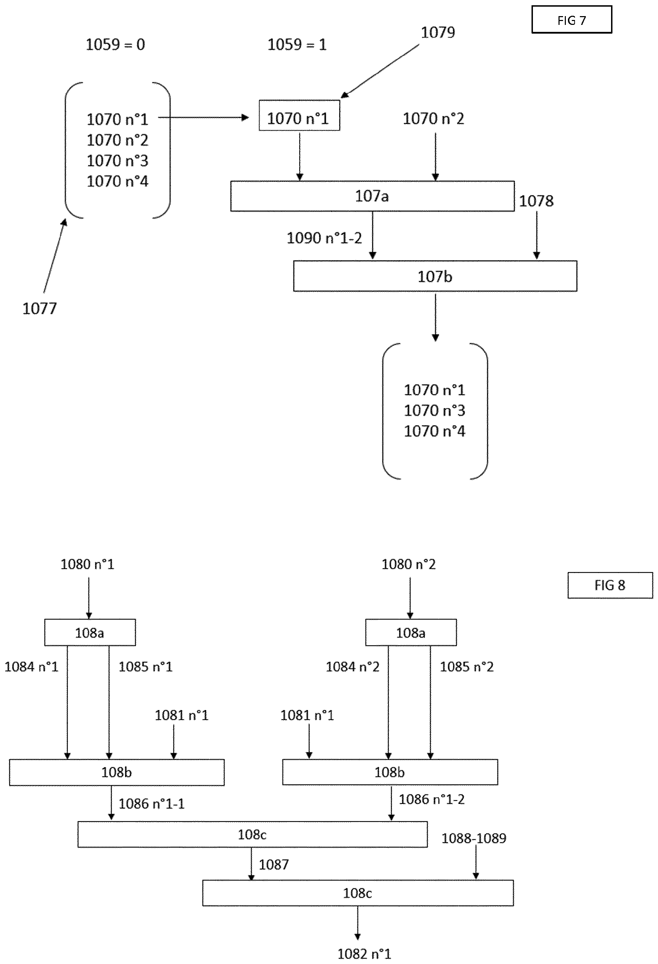

La production des groupes tertiaires 1080 se fait alors selon les mêmes étapes que la production des groupes secondaires 1070. L'étape 107 de production des groupes tertiaires 1080 est illustrée à la figure 7 et est basée sur une boucle d'itérations. Dans un premier temps, les groupes secondaires 1070 sont ordonnés au sein d'une seconde liste ordonnée 1077 dont le cardinal est égal au nombre de groupes secondaires 1070, c'est-à-dire qu'on leur affecte un rang se définissant par exemple, comme un nombre entier compris entre 1 et le nombre de groupes secondaires 1070. La seconde liste ordonnée 1077 est par exemple ordonnée par rang croissant. Sur la figure 7, la seconde liste ordonnée 1077 contient quatre groupes secondaires 1070 n°1, 1070 n°2, 1070 n°3, 1070 n°4 ayant respectivement pour rang 1,2,3,4.

Ensuite, on initialise le rang courant 1059 à la valeur 0. Le groupe secondaire 1070 dont le rang est le plus proche du rang courant 1059 mais n'est pas égal au rang courant 1059 devient le groupe secondaire courant 1079 et le rang du groupe secondaire courant 1079 est affecté au rang courant 1059.

Une seconde mesure de similitude 1090 est ensuite calculée entre le groupe secondaire courant 1079 et tous les autres groupes secondaire 1070 de la seconde liste ordonnée 1077, c'est-à-dire les groupes secondaires 1070 ayant un rang strictement supérieur au rang courant 1059. La seconde mesure de similitude 1090 dépend de la valeur temporelle 1075 estimée et par exemple, d'autres valeurs temporelles déterminées à partir de la valeur temporelle 1075 comme le nombre de périodes d'activité. La seconde mesure de similitude 1090 est par exemple une somme de termes dont chaque terme dépend d'une unique valeur temporelle 1032. Les groupes secondaires 1070 ayant un rang supérieur au rang courant 1059 et possédant une seconde mesure de similitude 1090 supérieure à un second seuil de similitude 1078 avec le groupe secondaire courant 1079 sont fusionnés avec le groupe secondaire courant 1079, c'est-à-dire que toutes les impulsions 1030 regroupées au sein des groupes secondaires 1070 fusionnés sont regroupées avec les impulsions 1030 du groupe secondaire courant 1079. Ces groupes secondaires sont alors supprimés de la seconde liste ordonnée 1077.

Dans la figure 7, le groupe secondaire de rang 1 1070 n°1 est choisi comme groupe secondaire courant 1079 puisque le rang courant 1059 vaut initialement 0. Le rang courant 1059 prend alors la valeur 1. Sur la figure 7, le groupe secondaire courant 1079 est comparé au groupe secondaire de rang 2 1070 n°2 de la seconde liste ordonnée 1077. L'étape 107a de calcul de la seconde mesure de similitude 1090 donne la seconde mesure de similitude 1090 n°1-2 entre le groupe secondaire courant 1070 n°1 et le groupe secondaire de rang 2 1070 n°2. L'étape 107b de comparaison entre la seconde mesure de similitude 1090 n°1-2 et le second seuil de similitude 1078 donne la seconde liste ordonnée 1077 obtenue après fusion ou non entre le groupe secondaire courant 1070 n°1 et le groupe secondaire de rang 2 1070 n°2. Dans la figure 7, le groupe secondaire courant 1070 n°1 et le groupe secondaire de rang 2 1070 n°2 sont fusionnés au sein du groupe secondaire de rang 1 1070 n°1 et le groupe secondaire de rang 2 1070 n°2 est supprimé de la seconde liste ordonnée 1077. La prochaine étape non représentée sur la figure 7 est de réaliser les étapes 107a-107b de calcul de la seconde mesure de similitude 1090 et de comparaison entre le groupe secondaire courant 1070 n°1 et les groupes secondaires restants 1070 n°3, 1070 n°4 dans la seconde liste ordonnée 1077. Si à l'issue de ces étapes 107a-107b, le groupe secondaire courant 1070 n°1 n'a pas été fusionné avec les groupes secondaires restants 1070 n°3, 1070 n°4 dans la seconde liste ordonnée 1077, le groupe secondaire courant 1070 n°1 devient un groupe tertiaire 1090 et le groupe secondaire de rang 3 1070 n°3 devient le groupe secondaire courant 1079. Le rang courant 1059 est alors affecté à la valeur 3. On continue ainsi tant qu'il reste dans la seconde liste ordonnée 1058 des groupes secondaires 1070 ayant un rang supérieur au rang courant 1059.

Quand la boucle d'itérations s'arrête, les groupes secondaires 1070 de la seconde liste ordonnée 1058 sont les groupes tertiaires 1090.

Il existe bien sûr une pluralité de boucles d'itérations pouvant décrire le même principe général que celui décrit dans la boucle proposée, à savoir fusionner les groupes secondaires 1070 similaires, la similitude se définissant par comparaison entre une seconde mesure de similitude 1090 et un second seuil de similitude 1078 et la seconde mesure de similitude 1090 étant définie à partir des valeurs temporelles 1075 estimées. Il aurait par exemple été possible d'initialiser le rang courant 1059 au cardinal de la seconde liste ordonnée 1077 et de réaliser les étapes tant qu'il reste des groupes secondaires 1070 ayant un rang inférieur au rang courant 1059 dans la seconde liste ordonnée 1077.

Après l'étape 107 de production des groupes tertiaires 1080, les groupes tertiaires 1080 contenant un nombre d'impulsions 1030 en dessous d'un nombre limite sont supprimés. Le nombre limite est par exemple 1% du nombre d'impulsions 1030 dans le bloc d'impulsions 1040. Les impulsions 1030 contenues dans les groupes tertiaires 1080 supprimés sont ajoutées aux résidus 1081.

Selon un premier mode de réalisation, le procédé 100 comporte une étape 108 de traitement des résidus 1081 dont le principe est illustré à la figure 8.

Pour chaque résidu 1081, trois actions peuvent être effectuées : soit le résidu 1081 est associé à un groupe tertiaire 1080 déjà existant, soit le résidu 1081 subit des traitements supplémentaires, soit le résidu 1081 est définitivement mis de côté. Pour déterminer quelle action à mener pour chaque résidu 1081, pour chaque groupe tertiaire 1080, un histogramme primaire 1084 de chaque caractéristique primaire 1031 et un histogramme secondaire 1085 de chaque caractéristique secondaire 1032 est calculé. Chaque groupe tertiaire 1080 est associé à un nombre d'histogrammes primaires 1084 correspondant au nombre de caractéristiques primaires 1031 et à un nombre d'histogrammes secondaires 1085 correspondant au nombre de caractéristiques secondaires 1032. Un histogramme primaire 1084 est par exemple un histogramme de fréquences.

Après l'étape 108a de calcul des histogrammes primaires 1084 et des histogrammes secondaires 1085, pour chaque résidu 1081 est calculée une note de correspondance 1086 entre le résidu 1081 et chaque groupe tertiaire 1080. Chaque note de correspondance 1086 dépend des histogrammes primaires 1084 et des histogrammes secondaires 1085 du groupe tertiaire dont on calcule la note de correspondance. La note de correspondance 1086 est par exemple une somme de termes dont chaque terme dépend d'un unique histogramme primaire 1084 ou d'un unique histogramme secondaire 1085. Par exemple, un terme dépendant d'un histogramme primaire 1084 vaut 0 si la caractéristique primaire 1031 correspondant à l'histogramme primaire 1084 du résidu 1081 ne peut pas être positionnée dans l'histogramme primaire 1085 et vaut une valeur de tolérance prenant en compte la différence entre la caractéristique primaire 1031 et l'occurrence de l'histogramme primaire 1085 correspondant à une valeur la plus proche de la caractéristique primaire 1031.

Pour chaque résidu 1081 sont calculées plusieurs notes de correspondance 1086 dont le nombre est égal au nombre de groupes tertiaires 1080. Sur la figure 8, deux notes de correspondance 1086 n°1-1, 1086 n°1-2 correspondant respectivement au groupe tertiaire 1080 n°1 et 1080 n°2 sont calculées.

Après l'étape 108b de calcul de notes de correspondance 1086, une étape 108c de comparaison de notes de correspondances 1086 donne la note de correspondance 1086 ayant la plus grande valeur c'est-à-dire la note de correspondance maximale 1087.

Ensuite, une étape 108d de seuillage compare la note de correspondance maximale 1087 avec un premier seuil de correspondance 1088 et un second seuil de correspondance 1089, le second seuil de correspondance 1089 ayant une valeur strictement inférieure au premier seuil de correspondance 1089. Si la note de correspondance maximale 1087 est au-dessus du premier seuil de correspondance 1088, le résidu 1081 est associé au groupe tertiaire 1080 correspondant à la note de correspondance maximale 1087. Si la note de correspondance maximale 1087 est en dessous du second seuil de correspondance 1089, le résidu 1081 subit de nouveaux traitements. Si la note de correspondance maximale 1087 est entre le premier seuil de correspondance 1088 et le second seuil de correspondance 1089, le résidu 1081 est éliminé.

Tous les résidus 1082 dont les notes de correspondance maximales 1087 sont en dessous du second seuil de correspondance 1089 sont regroupés dans un nouveau bloc d'impulsions 1041 qui subit les mêmes étapes que le bloc d'impulsions 1040 mais avec un paramétrage différent jusqu'à obtenir des groupes tertiaires de résidus 1083. Préférentiellement, le nouveau paramétrage choisi est moins exigeant que le paramétrage précédent, c'est-à-dire que le nouveau paramétrage est choisi pour permettre de créer des groupes dont les impulsions 1030 partagent moins de similitude que dans les groupes crées avec le paramétrage précédent. Par exemple, les valeurs de seuil de similitude sont moins élevées. Cela permet de trouver de potentiels radars 300 ayant peu d'impulsions 1030.

Après l'étape 108 de gestion des résidus 1081, une nouvelle étape de production des groupes tertiaires 1080 est réalisée comme illustré à la figure 7 mais en considérant les groupes tertiaires 1080 et les groupes tertiaires de résidus 1081 comme groupes secondaires 1070. De nouveaux groupes tertiaires 1080 sont ainsi obtenus. Chaque groupe tertiaire 1080 final est considéré comme étant un radar 300 ou un mode radar. Il est ainsi facile d'estimer le nombre de radars 300 ayant émis pendant l'acquisition. Chaque groupe tertiaire 1080 regroupe les impulsions 1030 associées à un radar 300 ou à un mode radar : ces impulsions 1030 peuvent ensuite être caractérisées pour déterminer les paramètres du radar 300 ou du mode radar comme par exemple la fréquence, la durée ou la direction d'arrivée des impulsions. Ces paramètres peuvent par la suite permettre d'identifier le radar 300 si celui-ci est déjà enregistré dans une base de données ou d'enrichir la base de données par l'ajout d'un nouveau radar 300.

Selon un deuxième mode de réalisation, le procédé 100 ne comporte pas d'étape 108 de traitement des résidus 1081 et les groupes tertiaires 1080 obtenus à la fin de la première étape 107 de production des groupes tertiaires 1080 donnent directement les radars 300 ou modes radar.

## Revendications

**1.** Procédé de détection (100) d'au moins un radar (300) dans un environnement, le procédé (100) étant mis en œuvre par un dispositif (200) comportant une unité de calcul (201) et un réseau antennaire (202) comportant au moins une antenne (203) apte à réaliser des acquisitions de l'environnement sous forme de signaux d'acquisition (1010) et à recevoir et transmettre les signaux d'acquisition (1010) sous forme numérique à l'unité de calcul (201), l'unité de calcul (201) étant apte à réaliser des traitements sur des signaux numérisés (1020), le procédé (100) comportant les différentes étapes suivantes :

- Recevoir et numériser les signaux d'acquisition (1010) sous forme de signaux numérisés (1020) et transmettre les signaux numérisés (1020) à l'unité de calcul (201) (101) ;
- Découper les signaux numérisés (1020) en impulsions (1030), caractériser chaque impulsion pour obtenir des caractéristiques primaires (1031) et des caractéristiques secondaires (1032), les caractéristiques primaires (1031) étant choisies parmi au moins le groupe formé des caractéristiques suivantes : fréquence de l'impulsion, durée de l'impulsion, niveau de l'impulsion, direction d'arrivée de l'impulsion et modulation interne de l'impulsion, les caractéristiques secondaires (1032) comportant l'instant de l'impulsion (102) ;
- Regrouper les impulsions par bloc d'impulsions (1040) (103) ;
- Pour chaque bloc d'impulsions (1040) :
∘ Regrouper les impulsions (1030) en fonction de leurs caractéristiques primaires (1031) pour produire des groupes primaires (1050) (104) ;

• Pour chaque groupe primaire (1050) :
∘ Calculer des caractéristiques primaires de groupes primaires (1060) par moyennage des valeurs des caractéristiques primaires (1031) des impulsions (1030) regroupées dans le groupe primaire (1050) (105) ;
• Regrouper les groupes primaires (1050) en fonction des caractéristiques primaires de groupes primaires (1060) pour produire des groupes secondaires (1070) (106) ;
• Regrouper les groupes secondaires (1070) en fonction de caractéristiques secondaires (1032) des impulsions (1030) regroupées dans chaque groupe secondaire (1070) pour produire des groupes tertiaires (1080) (107) ;
• Détecter au moins un radar (300), chaque groupe tertiaire (1080) étant considéré comme un radar (300) ou un mode radar (108).

**2.** Procédé de détection selon l'une quelconque des revendications précédentes, **caractérisé en ce que** l'étape de production des groupes primaires (1050) (104) comporte les sous-étapes suivantes :

- Sélectionner au moins une caractéristique primaire (1050) ;
- Initialiser le résultat de la production des groupes primaires (1050) par une partition comportant les impulsions (1030) du bloc d'impulsions (1040) ;
- Pour chaque caractéristique primaire (1050) sélectionnée, produire au moins une partition (1052) par mise en œuvre d'un algorithme de partitionnement (1051), l'algorithme de partitionnement (1051) partitionnant séquentiellement les partitions (1052) obtenues suite à la mise en œuvre de cette sous-étape pour la caractéristique primaire (1050) précédente ou l'initialisation du résultat.
- Les groupes primaires (1050) sont les partitions (1052) obtenues après avoir traité toutes les caractéristiques primaires (1030) sélectionnées.

**3.** Procédé de détection selon la revendication 2, **caractérisé en ce que** l'algorithme de partitionnement (1051) utilise une métrique basée sur la caractéristique primaire (1050) utilisée et produit une liste d'impulsions ordonnée (1053), chaque impulsion (1030) étant associée à une valeur de distance (1054) selon ladite métrique, la séquence ordonnée de valeurs de distance (1055) obtenue étant alors considérée comme une fonction, la séparation entre deux partitions (1052) se faisant au niveau d'une impulsion (1030) pour laquelle la valeur de la dérivée (1056) de ladite fonction remplit une condition prédéterminée relativement à un seuil de dérivée (1057) prédéterminé.

**4.** Procédé de détection selon l'une quelconque des revendications précédentes, **caractérisé en ce que** l'étape de production des groupes secondaires (1070) (106) comporte plusieurs sous-étapes :

- Ordonner les groupes primaires (1050) au sein d'une première liste ordonnée (1058), chaque groupe primaire (1050) ayant un rang dans la première liste ordonnée (1058), les rangs étant choisis arbitrairement croissants et supérieurs ou égaux à 1 ;
- Affecter un rang courant (1059) à 0 ;
- Tant qu'il reste des groupes primaires (1050) ayant un rang supérieur au rang courant (1059) dans la première liste ordonnée (1058) :

• Sélectionner le groupe primaire (1050) dont le rang est le plus proche du rang courant (1059) sans être égal au rang courant (1059) pour qu'il devienne le groupe primaire courant (1076) et affecter au rang courant (1059) le rang du groupe primaire courant (1076) ;
• Calculer une première mesure de similitude (1051) fonction des caractéristiques primaires de groupes primaires (1060) entre le groupe primaire courant (1076) et chacun des groupes primaires (1050) ayant un rang supérieur au rang courant (1059) restant dans la première liste ordonnée (1058) (105a) ;
• Pour chaque groupe primaire (1050) ayant un rang supérieur au rang courant (1059) dont la première mesure de similitude (1051) est supérieure à un premier seuil de similitude (1052) prédéterminé, fusionner le groupe primaire (1050) avec le groupe primaire courant (1076) et supprimer le groupe primaire (1050) de la liste ordonnée (105b).

- Les groupes secondaires (1070) sont les groupes primaires (1050) restants dans la première liste ordonnée (1058).

5. Procédé de détection selon l'une quelconque des revendications précédentes, **caractérisé en ce que** l'étape de production des groupes tertiaires (1080) comporte plusieurs sous-étapes :

- Pour chaque groupe secondaire (1070) :

• Réaliser un histogramme des différences d'instants d'impulsion (1071) des impulsions du groupe secondaire (1070), histogramme des différences d'instants d'impulsion (1071) représentant l'occurrence des différences d'instants d'impulsion sur une pluralité d'intervalles de temps appelés bins (1072).
• Etudier la seconde moitié (1073) de l'histogramme des différences d'instants d'impulsion (1071) : si toutes les occurrences sont nulles sauf l'occurrence du dernier bin (1074), estimer une valeur temporelle (1075) caractérisant le groupe secondaire (1070).

- Ordonner les groupes secondaires (1070) au sein d'une seconde liste ordonnée (1077), chaque groupe secondaire (1070) ayant un rang dans la seconde liste ordonnée (1077), les rangs étant choisis arbitrairement croissants et supérieurs ou égaux à 1 ;
- Affecter le rang courant (1059) à 0 ;
- Tant qu'il reste des groupes secondaires (1070) ayant un rang supérieur au rang courant dans la seconde liste ordonnée (1077) :

• Sélectionner le groupe secondaire (1070) dont le rang est le plus proche du rang courant (1059) sans être égal au rang courant (1059) pour qu'il devienne le groupe secondaire courant (1079) et affecter au rang courant (1059) le rang du groupe secondaire courant (1079) ;
• Calculer une seconde mesure de similitude (1090) fonction de la valeur temporelle (1075) entre le groupe secondaire courant (1079) et chacun des groupes secondaires (1050) ayant un rang supérieur au rang courant (1059) restant dans la seconde liste ordonnée (1077) ;
• Pour chaque groupe secondaire (1070) ayant un rang supérieur au rang courant (1059) dont la seconde mesure de similitude (1090) est supérieure à un second seuil de similitude (1078) prédéterminé, fusionner le groupe secondaire (1070) avec le groupe secondaire courant (1079) et supprimer le groupe secondaire (1070) de la seconde liste ordonnée (1077).

- Les groupes tertiaires (1070) sont les groupes secondaires (1050) restants dans la seconde liste ordonnée (1077).

6. Procédé de détection selon l'une quelconque des revendications précédentes, **caractérisé en ce qu'**il comporte une étape de gestion des résidus (1081) (108), les résidus (1081) se définissant comme les impulsions (1030) d'un bloc d'impulsion (1040) n'appartenant à aucun groupe tertiaire (1080).

7. Procédé de détection selon la revendication 6, **caractérisé en ce que** l'étape de traitement des résidus (1081) (108) comporte les sous-étapes suivantes :

- Pour chaque groupe tertiaire (1080), calculer un histogramme primaire (1084) de chaque caractéristique primaire (1031) et un histogramme secondaire (1085) de chaque caractéristique secondaire (1032).
- Pour chaque résidu (1081):

• Calculer une note de correspondance (1086) entre le résidu (1081) et chaque groupe tertiaire (1080) en fonction de ses histogrammes primaires (1084) et de ses histogrammes secondaires (1085) ;
• Sélectionner la note de correspondance maximale (1087) obtenue ;
• Associer le résidu (1081) au groupe tertiaire (1080) correspondant à la note de correspondance maximale (1087) si la note de correspondance maximale (1087) est au-dessus d'un premier seuil de correspondance (1088) prédéterminé ;
• Eliminer le résidu (1081) si la note de correspondance maximale (1087) est en dessous du premier seuil de correspondance (1088) et au-dessus d'un second seuil de correspondance (1089) prédéterminé ;

- Regrouper les résidus non associés et non éliminés (1082) dans un bloc d'impulsion de résidus (1041) et réaliser les mêmes étapes de regroupement (103-104-105-106-107) pour former des groupes tertiaires de résidus (1083).

8. Procédé de détection selon la revendication 7, **caractérisé en ce que** les groupes tertiaires de résidus (1083) sont regroupés avec les groupes tertiaires (1080) en réalisant les mêmes sous-étapes que la production des groupes tertiaires (1080) (107) pour obtenir des nouveaux groupes tertiaires (1080).

9. Dispositif (200) comportant un réseau antennaire (202) comportant au moins une d'antenne (203) apte à recevoir et à numériser des signaux d'acquisition (1010) pour les transmettre à une unité de calcul (201) sous forme de signaux numérisés (1020) ;
le dispositif étant **caractérisé en ce qu'**il comporte :
une unité de calcul (201) configurée pour mettre en oeuvre d'un procédé (100) selon l'une quelconque des revendications précédentes.

10. Produit programme d'ordinateur comprenant des instructions qui, lorsque le programme est exécuté par un dispositif selon la revendication 9 conduisent celui-ci à mettre en œuvre le procédé (100) selon l'une quelconque des revendications 1 à 8.

11. Support d'enregistrement lisible par une unité de calcul d'un dispositif selon la revendication 9 comprenant des instructions qui, lorsqu'elles sont exécutées par l'unité de calcul, conduisent le dispositif à mettre en œuvre le procédé (100) selon l'une quelconque des revendications 1 à 8.

**Patentansprüche**

1. Verfahren zur Erkennung (100) mindestens eines Radars (300) in einer Umgebung, wobei das Verfahren (100) durch eine Vorrichtung (200) implementiert wird, die eine Recheneinheit (201) und ein Antennennetz (202) mit mindestens einer Antenne (203) umfasst, die in der Lage ist, Erfassungen der Umgebung in Form von Erfassungssignalen (1010) durchzuführen und die Erfassungssignale (1010) in digitaler Form zu empfangen und an die Recheneinheit (201) zu übertragen, wobei die Recheneinheit (201) in der Lage ist, Verarbeitungen an den digitalisierten Signalen (1020) durchzuführen, wobei das Verfahren (100) die folgenden verschiedenen Schritte aufweist:

- Empfangen und Digitalisieren der Erfassungssignale (1010) in Form von digitalisierten Signalen (1020) und Übertragen der digitalisierten Signale (1020) an die Recheneinheit (201) (101);
- Zerlegen der digitalisierten Signale (1020) in Impulse (1030), Charakterisieren jedes Impulses, um primäre Merkmale (1031) und sekundäre Merkmale (1032) zu erhalten, wobei die primären Merkmale (1031) aus mindestens der Gruppe ausgewählt sind, die aus den folgenden Merkmalen gebildet wird: Impulsfrequenz, Impulsdauer, Impulspegel, Ankunftsrichtung des Impulses und interne Modulation des Impulses, wobei die sekundären Merkmale (1032) den Zeitpunkt des Impulses (102) aufweisen;
- Gruppieren der Impulse nach Impulsblock (1040) (103);
- Für jeden Impulsblock (1040):
o Gruppieren der Impulse (1030) anhand ihrer primären Merkmale (1031), um primäre Gruppen (1050) (104) zu erzeugen;

• Für jede primäre Gruppe (1050):
o Berechnen der primären Merkmale von primären Gruppen (1060) durch Mittelung der Werte der primären Merkmale (1031) der Impulse (1030), die in der primären Gruppe (1050) (105) gruppiert sind;
• Gruppieren der primären Gruppen (1050) anhand der primären Merkmale von primären Gruppen (1060), um sekundäre Gruppen (1070) (106) zu erzeugen;
• Gruppieren der sekundären Gruppen (1070) anhand von sekundären Merkmalen (1032) der Impulse (1030), die in jeder sekundären Gruppe (1070) gruppiert sind, um tertiäre Gruppen (1080) (107) zu erzeugen;
• Erkennen von mindestens einem Radar (300), wobei jede tertiäre Gruppe (1080) als ein Radar (300) oder ein Radarmodus (108) betrachtet wird.

2. Erkennungsverfahren nach einem der vorstehenden Ansprüche, **dadurch gekennzeichnet, dass** der Schritt zur Erzeugung der primären Gruppen (1050) (104) die folgenden Teilschritte aufweist:

- Auswählen von mindestens einem primären Merkmal (1050);
- Initialisieren des Ergebnisses der Erzeugung der primären Gruppen (1050) durch eine Partition, welche die Impulse (1030) des Impulsblocks (1040) aufweist;
- Für jedes ausgewählte primäre Merkmal (1050), Erzeugen mindestens einer Partition (1052) durch Implementierung eines Partitionierungsalgorithmus (1051), wobei der Partitionierungsalgorithmus (1051) sequentiell die Partitionen (1052) partitioniert, die infolge der Implementierung dieses Teilschritts für das vorherige primäre Merkmal (1050) oder der Initialisierung des Ergebnisses erhalten werden;
- Die primären Gruppen (1050) sind die Partitionen (1052), die nach der Verarbeitung aller ausgewählten primären Merkmale (1030) erhalten werden.

3. Erkennungsverfahren nach Anspruch 2, **dadurch gekennzeichnet, dass** der Partitionierungsalgorithmus (1051) eine Metrik verwendet, die auf dem verwendeten primären Merkmal (1050) basiert, und eine geordnete Impulsliste (1053) erzeugt, wobei jedem Impuls (1030) ein Abstandswert (1054) gemäß der Metrik zugeordnet wird, wobei die erhaltene geordnete Folge von Abstandswerten (1055) dann als eine Funktion betrachtet wird, wobei die Trennung zwischen zwei Partitionen (1052) bei einem Impuls (1030) erfolgt, bei dem der Wert der Ableitung (1056) der Funktion eine vorbestimmte Bedingung relativ zu einem vorbestimmten Ableitungsschwellenwert (1057) erfüllt.

4. Erkennungsverfahren nach einem der vorstehenden Ansprüche, **dadurch gekennzeichnet, dass** der Schritt zur Erzeugung der sekundären Gruppen (1070) (106) mehrere Teilschritte aufweist:

- Ordnen der primären Gruppen (1050) innerhalb einer ersten geordneten Liste (1058), wobei jede primäre Gruppe (1050) einen Rang in der ersten geordneten Liste (1058) hat, wobei die Ränge willkürlich aufsteigend und größer als oder gleich 1 gewählt werden;
- Zuweisen eines aktuellen Rangs (1059) zu 0;
- Solange primäre Gruppen (1050) mit einem höheren Rang als dem aktuellen Rang (1059) in der ersten geordneten Liste (1058) verbleiben:

• Auswählen der primären Gruppe (1050), deren Rang dem aktuellen Rang (1059) am nächsten kommt, aber nicht gleich dem aktuellen Rang (1059) ist, damit sie zur aktuellen primären Gruppe (1076) wird, und Zuweisen des Rangs der aktuellen primären Gruppe (1076) zum aktuellen Rang (1059);
• Berechnen eines ersten Ähnlichkeitsmaßes (1051) anhand der primären Merkmale von primären Gruppen (1060) zwischen der aktuellen primären Gruppe (1076) und jeder der primären Gruppen (1050), die einen höheren Rang als den aktuellen Rang (1059) haben, der in der ersten geordneten Liste (1058) (105a) verbleibt;
• Für jede primäre Gruppe (1050) mit einem höheren Rang als dem aktuellen Rang (1059), deren erstes Ähnlichkeitsmaß (1051) größer als ein vorbestimmter erster Ähnlichkeitsschwellenwert (1052) ist, Verschmelzen der primären Gruppe (1050) mit der aktuellen primären Gruppe (1076) und Entfernen der primären Gruppe (1050) aus der geordneten Liste (105b);

- Die sekundären Gruppen (1070) sind die primären Gruppen (1050), die in der ersten geordneten Liste (1058) verbleiben.

5. Erkennungsverfahren nach einem der vorstehenden Ansprüche, **dadurch gekennzeichnet, dass** der Schritt zur Erzeugung der tertiären Gruppen (1080) mehrere Teilschritte aufweist:

- Für jede sekundäre Gruppe (1070):

• Erstellen eines Histogramms der Impulszeitpunktdifferenzen (1071) der Impulse der sekundären Gruppe (1070), wobei das Histogramm der Impulszeitpunktdifferenzen (1071) das Auftreten der Impulszeitpunktdifferenzen über eine Vielzahl von Zeitintervallen, die als Bins (1072) bezeichnet werden, darstellt;
• Untersuchen der zweiten Hälfte (1073) des Histogramms der Impulszeitpunktdifferenzen (1071): Wenn alle Auftreten bis auf das Auftreten des letzten Bin (1074) null sind, Schätzen eines Zeitwerts (1075), der die sekundäre Gruppe (1070) charakterisiert;

- Ordnen der sekundären Gruppen (1070) innerhalb einer zweiten geordneten Liste (1077), wobei jede sekundäre Gruppe (1070) einen Rang in der zweiten geordneten Liste (1077) hat, wobei die Ränge willkürlich aufsteigend und größer als oder gleich 1 gewählt werden;
- Zuweisen des aktuellen Rangs (1059) zu 0;
- Solange sekundäre Gruppen (1070) mit einem höheren Rang als dem aktuellen Rang in der zweiten geordneten Liste (1077) verbleiben:

• Auswählen der sekundäre Gruppe (1070) deren Rang dem aktuellen Rang (1059) am nächsten kommt, aber nicht gleich dem aktuellen Rang (1059) ist, damit sie zur aktuellen sekundären Gruppe (1079) wird, und Zuweisen des Rangs der aktuellen sekundären Gruppe (1079) zum aktuellen Rang (1059);
• Berechnen eines zweiten Ähnlichkeitsmaßes (1090) als Funktion des Zeitwerts (1075) zwischen der aktuellen sekundären Gruppe (1079) und jeder der sekundären Gruppen (1050), die einen höheren Rang als den aktuellen Rang (1059) haben, der in der zweiten geordneten Liste (1077) verbleibt;
• Für jede sekundäre Gruppe (1070) mit einem höheren Rang als der aktuelle Rang (1059), deren zweites Ähnlichkeitsmaß (1090) größer als ein vorbestimmter zweiter Ähnlichkeitsschwellenwert (1078) ist, Verschmelzen der sekundären Gruppe (1070) mit der aktuellen sekundären Gruppe (1079) und Entfernen der sekundären Gruppe (1070) aus der zweiten geordneten Liste (1077);

- Die tertiären Gruppen (1070) sind die sekundären Gruppen (1050), die in der zweiten geordneten Liste (1077) verbleiben.

6. Erkennungsverfahren nach einem der vorstehenden Ansprüche, **dadurch gekennzeichnet, dass** es einen Schritt zur Verwaltung von Resten (1081) (108) aufweist, wobei die Reste (1081) als die Impulse (1030) eines Impulsblocks (1040) definiert sind, die zu keiner tertiären Gruppe (1080) gehören.

7. Erkennungsverfahren nach Anspruch 6, **dadurch gekennzeichnet, dass** der Schritt der Verarbeitung der Reste (1081) (108) die folgenden Teilschritte aufweist:

- Für jede tertiäre Gruppe (1080), Berechnen eines primären Histogramms (1084) von jedem primären Merkmal (1031) und eines sekundären Histogramms (1085) von jedem sekundären Merkmal (1032);
- Für jeden Rest (1081):

• Berechnen einer Übereinstimmungsbewertung (1086) zwischen dem Rest (1081) und jeder tertiären Gruppe (1080) anhand ihrer primären Histogramme (1084) und ihrer sekundären Histogramme (1085);
• Auswählen der höchsten erzielten Übereinstimmungsbewertung (1087);
• Zuordnen des Rests (1081) zu der tertiären Gruppe (1080), die der maximalen Übereinstimmungsbewertung (1087) entspricht, wenn die maximale Übereinstimmungsbewertung (1087) über einem ersten vorbestimmten Übereinstimmungsschwellenwert (1088) liegt;
• Eliminieren des Rests (1081), wenn die maximale Übereinstimmungsbewertung (1087) unterhalb des ersten Übereinstimmungsschwellenwerts (1088) und oberhalb eines vorbestimmten zweiten Übereinstimmungsschwellenwerts (1089) liegt;

- Gruppieren der nicht zugeordneten und nicht eliminierten Reste (1082) in einen Restimpulsblock (1041) und Durchführen der gleichen Gruppierungsschritte (103-104-105-106-107) zur Bildung von tertiären Gruppen von Resten (1083).

8. Erkennungsverfahren nach Anspruch 7, **dadurch gekennzeichnet, dass** die tertiären Gruppen von Resten (1083) mit den tertiären Gruppen (1080) gruppiert werden, indem die gleichen Teilschritte wie die Erzeugung der tertiären Gruppen (1080) (107) durchgeführt werden, um neue tertiäre Gruppen (1080) zu erhalten.

9. Vorrichtung (200), die ein Antennennetzwerk (202) aufweist, das mindestens eine Antenne (203) aufweist, die in der Lage ist,
Erfassungssignale (1010) zu empfangen und zu digitalisieren, um sie in Form von digitalisierten Signalen (1020) an eine Recheneinheit (201 ) zu übertragen;
wobei die Vorrichtung **dadurch gekennzeichnet ist, dass** sie Folgendes aufweist:
eine Recheneinheit (201), die zur Implementierung eines Verfahrens (100) nach einem der vorstehenden Ansprüche konfiguriert ist.

10. Computerprogrammprodukt, das Anweisungen umfasst, die, wenn das Programm von einer Vorrichtung nach Anspruch 9 ausgeführt wird, diese veranlassen, das Verfahren (100) nach einem der Ansprüche 1 bis 8 zu implementieren.

11. Aufzeichnungsmedium, das von einer Recheneinheit einer Vorrichtung nach Anspruch 9 lesbar ist, das Anweisungen umfasst, die, wenn sie von der Recheneinheit ausgeführt werden, die Vorrichtung veranlassen, das Verfahren (100) nach einem der Ansprüche 1 bis 8 zu implementieren.

**Claims**

1. A method (100) for detecting at least one radar (300) in an environment, the method (100) being implemented by a device (200) comprising a computing unit (201) and an antenna array (202) comprising at least one antenna (203) capable of performing acquisitions of the environment in the form of acquisition signals (1010) and of receiving and transmitting the acquisition signals (1010) in digital form to the computing unit (201), the computing unit (201) being able to perform processes on digitized signals (1020), the method (100) comprising the following various steps:

   - Receiving and digitizing the acquisition signals (1010) in the form of digitized signals (1020) and transmitting the digitized signals (1020) to the computing unit (201) (101);
   - Chopping the digitized signals (1020) into pulses (1030), characterizing each pulse in order to obtain primary characteristics (1031) and secondary characteristics (1032), the primary characteristics (1031) being selected from at least the group consisting of the following characteristics: pulse frequency, pulse duration, pulse level, pulse arrival direction, and internal pulse modulation, the secondary characteristics (1032) comprising the pulse time (102);
   - Grouping the pulses into pulse blocks (1040) (103);
   - For each pulse block (1040):
   ∘ Grouping the pulses (1030) based on their primary characteristics (1031) in order to produce primary groups (1050) (104);

      • For each primary group (1050):
      ∘ Calculating primary characteristics of primary groups (1060) by averaging the values of the primary characteristics (1031) of the pulses (1030) grouped into the primary group (1050) (105);
      • Grouping the primary groups (1050) based on the primary characteristics of primary groups (1060) in order to produce secondary groups (1070) (106);
      • Grouping the secondary groups (1070) based on secondary characteristics (1032) of the pulses (1030) grouped into each secondary group (1070) in order to produce tertiary groups (1080) (107);
      • Detecting at least one radar (300), each tertiary group (1080) being considered a radar (300) or a radar mode (108).

2. The detection method according to any one of the preceding claims, **characterized in that** the step of producing the primary groups (1050) (104) comprises the following sub-steps:

   - Selecting at least one primary characteristic (1050);
   - Initializing the result of the production of the primary groups (1050) by a partition comprising the pulses (1030) of the pulse block (1040);
   - For each primary characteristic (1050) selected, producing at least one partition (1052) by implementing a partitioning algorithm (1051), the partitioning algorithm (1051) sequentially partitioning the partitions (1052) obtained after the implementation of this sub-step for the preceding primary characteristic (1050) or the initialization of the result;
   - The primary groups (1050) are the partitions (1052) obtained after having processed all the primary characteristics (1030) selected.

3. The detection method according to claim 2, **characterized in that** the partitioning algorithm (1051) uses a metric based on the primary characteristic (1050) used and produces an ordered list of pulses (1053), each pulse (1030) being associated with a distance value (1054) according to said metric, the ordered sequence of distance values (1055) obtained then being considered to be a function, the separation between two partitions (1052) being made at a pulse (1030) for which the value of the derivative (1056) of said function fulfills a predetermined condition relative to a predetermined derivative threshold (1057).

4. The detection method according to any one of the preceding claims, **characterized in that** the step of producing the secondary groups (1070) (106) comprises a plurality of sub-steps:

- Ordering the primary groups (1050) within a first ordered list (1058), each primary group (1050) having a rank in the first ordered list (1058), the ranks being selected to be arbitrarily rising and greater than or equal to 1;
- Assigning a current rank (1059) to 0;
- As long as there are primary groups (1050) with a rank greater than the current rank (1059) in the first ordered list (1058):

• Selecting the primary group (1050) with the rank closest to the current rank (1059) without being equal to the current rank (1059) in order for it to become the current primary group (1076) and assigning to the current rank (1059) the rank of the current primary group (1076);
• Calculating a first similarity measure (1051) based on the primary characteristics of primary groups (1060) between the current primary group (1076) and each of the primary groups (1050) having a rank greater than the current rank (1059) remaining in the first ordered list (1058) (105a);
• For each primary group (1050) having a rank greater than the current rank (1059) whose first similarity measure (1051) is greater than a predetermined first similarity threshold (1052), merging the primary group (1050) with the current primary group (1076) and deleting the primary group (1050) from the ordered list (105b);

- The secondary groups (1070) are the primary groups (1050) remaining in the first ordered list (1058).

5. The detection method according to any one of the preceding claims, **characterized in that** the step of producing the tertiary groups (1080) comprises a plurality of sub-steps:

- For each secondary group (1070):

• Producing a histogram of pulse time differences (1071) of the pulses of the secondary group (1070), the histogram of pulse time differences (1071) representing the occurrence of pulse time differences over a plurality of time intervals referred to as bins (1072);
• Studying the second half (1073) of the histogram of pulse time differences (1071): if all occurrences are zero except for the occurrence of the last bin (1074), estimating a time value (1075) characterizing the secondary group (1070);

- Ordering the secondary groups (1070) within a second ordered list (1077), each secondary group (1070) having a rank in the second ordered list (1077), the ranks being chosen to be arbitrarily rising and greater than or equal to 1;
- Assigning the current rank (1059) to 0;
- As long as there are secondary groups (1070) with a rank greater than the current rank in the second ordered list (1077):

• Selecting the secondary group (1070) with the rank closest to the current rank (1059) without being equal to the current rank (1059) in order for it to become the current secondary group (1079) and assigning to the current rank (1059) the rank of the current secondary group (1079);
• Calculating a second similarity measure (1090) based on the time value (1075) between the current secondary group (1079) and each of the secondary groups (1050) having a rank greater than the current rank (1059) remaining in the second ordered list (1077);
• For each secondary group (1070) having a rank greater than the current rank (1059) whose second similarity measure (1090) is greater than a predetermined second similarity threshold (1078), merging the secondary group (1070) with the current secondary group (1079) and deleting the secondary group (1070) from the second ordered list (1077);

- The tertiary groups (1070) are the secondary groups (1050) remaining in the second ordered list (1077).

6.  The detection method according to any one of the preceding claims, **characterized in that** it comprises a step of managing residues (1081) (108), the residues (1081) being defined as the pulses (1030) of a pulse block (1040) that do not belong to any tertiary group (1080).

7.  The detection method according to claim 6, **characterized in that** the step of processing the residues (1081) (108) comprises the following sub-steps:

    - For each tertiary group (1080), calculating a primary histogram (1084) of each primary characteristic (1031) and a secondary histogram (1085) of each secondary characteristic (1032);
    - For each residue (1081):

      • Calculating a matching score (1086) between the residue (1081) and each tertiary group (1080) based on its primary histograms (1084) and its secondary histograms (1085);
      • Selecting the maximum matching score (1087) obtained;
      • Associating the residue (1081) with the tertiary group (1080) corresponding to the maximum matching score (1087) if the maximum matching score (1087) is above a predetermined first matching threshold (1088);
      • Removing the residue (1081) if the maximum matching score (1087) is below the first matching threshold (1088) and above a predetermined second matching threshold (1089);

    - Grouping the unassociated residues (1082) that have not been removed into a residue pulse block (1041) and performing the same grouping steps (103-104-105-106-107) in order to form tertiary groups of residues (1083).

8.  The detection method according to claim 7, **characterized in that** the tertiary groups of residues (1083) are grouped with the tertiary groups (1080) by performing the same sub-steps as the production of the tertiary groups (1080) (107) in order to obtain new tertiary groups (1080).

9.  A device (200) comprising an antenna array (202) comprising at least one antenna (203) capable of receiving and digitizing acquisition signals (1010) in order to transmit them to a computing unit (201) in the form of digitized signals (1020);
    the device being **characterized in that** it comprises:
    a computing unit (201) configured to implement a method (100) according to any one of the preceding claims.

10. A computer program product comprising instructions which, when the program is executed by a device according to claim 9, lead the latter to implement the method (100) according to any one of claims 1 to 8.

11. A storage medium that can be read by a computing unit of a device according to claim 9 comprising instructions which, when they are executed by the computing unit, lead the device to implement the method (100) according to any one of claims 1 to 8.

1010

100

101

FIG 1

1020

102

1030-1031-1032

103

1040          1041

104

1050

105

1060

106

1070

107

1081    1080          1083

108

1080          1082

107

1080

109

FIG 2

FIG 3

FIG 4

1051

| 1030 n°1 | → | 1054 n°1 |
| 1030 n°2 | → | 1054 n°2 |
| 1030 n°3 | → | 1054 n°3 |
| 1030 n°4 | → | 1054 n°4 |
| 1030 n°5 | → | 1054 n°5 |

1053

1055

1091

1056

1057

FIG 5

1059 = 0          1059 = 1          1076

| 1050 n°1 |
| 1050 n°2 |
| 1050 n°3 |
| 1050 n°4 |

1050 n°1          1050 n°2

1058

105a          1052

1051 n°1-2

105b

1050 n°1
1050 n°3
1050 n°4

FIG 6A

1071

1074

1073

1072

FIG 6B

1075   1075   1075

FIG 7

$1059 = 0$          $1059 = 1$          1079

| 1070 n°1 |
| 1070 n°2 |
| 1070 n°3 |
| 1070 n°4 |

1070 n°1          1070 n°2

1077

107a          1078

1090 n°1-2

107b

| 1070 n°1 |
| 1070 n°3 |
| 1070 n°4 |

FIG 8

1080 n°1                    1080 n°2

108a                    108a

1084 n°1      1085 n°1        1084 n°2      1085 n°2

1081 n°1            1081 n°1

108b                    108b

1086 n°1-1            1086 n°1-2

108c          1088-1089

1087

108c

1082 n°1

24

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2011150053 A